# EUROPÄISCHE PATENTSCHRIFT

(11) **EP 1 281 008 B1**
(45) Veröffentlichungstag und Bekanntmachung des Hinweises auf die Patenterteilung: **11.10.2006**
(21) Anmeldenummer: 01938179.7
(22) Anmeldetag: 05.05.2001
(51) Int. Cl.: F16D 23/06

(54) **SYNCHRONISIEREINRICHTUNG MIT ASYMMETRISCHER VERZAHNUNG**
SYNCHRONIZING DEVICE WITH ASYMMETRICAL TOOTHING
DISPOSITIF DE SYNCHRONISATION DOTE D'UNE DENTURE ASYMETRIQUE

(30) Priorität: 10.05.2000 DE 10022509
(43) Veröffentlichungstag der Anmeldung: 05.02.2003
(73) Patentinhaber: ZF FRIEDRICHSHAFEN Aktiengesellschaft, 88038 Friedrichshafen (DE); Bayerische Motoren Werke Aktiengesellschaft, 80788 München (DE)
(72) Erfinder: BLECHSCHMIDT, Dirk, 14770 Brandenburg (DE); BERNAU, Wolfgang, 14776 Brandenburg (DE); BATHE, Kurt, 14772 Brandenburg (DE); BASSNER, Heinz, 85757 Karlsfeld (DE); EBERT, Thomas, 81929 München (DE)
(86) Internationale Anmeldenummer: PCT/EP2001/005115
(87) Internationale Veröffentlichungsnummer: WO 2001/086163

(56) Entgegenhaltungen:
- DE-C- 19 646 850
- FR-A- 1 152 699
- PATENT ABSTRACTS OF JAPAN vol. 1995, no. 10, 30. November 1995 (1995-11-30) & JP 07 190092 A (MAZDA MOTOR CORP), 28. Juli 1995 (1995-07-28)
- PATENT ABSTRACTS OF JAPAN vol. 1998, no. 02, 30. Januar 1998 (1998-01-30) & JP 09 273571 A (MAZDA MOTOR CORP), 21. Oktober 1997 (1997-10-21)

## Beschreibung

Die Erfindung betrifft ein Schaltgetriebe nach dem Oberbegriff von Anspruch 1. Ein solches Schaltgetriebe mit asymmetrischer Verzahnung ist FR-A-1.152.699 bekannt.

Synchronisiereinrichtungen für Schaltgetriebe von Kraftfahrzeugen weisen eine durch axiales Verschieben mit einer Welle drehstarr verbindbare und mit einer Innenverzahnung versehenen Schiebemuffe auf, einen mit einer Außenverzahnung versehenen Kupplungskörper sowie einen Synchronring, der in Umfangsrichtung mit der Schiebemuffe über eine Außenverzahnung in formschlüssiger und mit dem Kupplungskörper in reibschlüssiger Verbindung steht. Die Verzahnung des Synchronringes weist unter einem Winkel zueinander angeordnete Sperrflächen auf zum Eingriff in entsprechende Sperrflächen der Verzahnung der Schiebemuffe.

Derartige Synchronisiereinrichtungen sind vielfältig bekannt und z. B. in der DE-PS 26 59 448 beschrieben. Wird ein Gang durch Verschieben der Schiebemuffe in axialer Richtung von der Neutralstellung aus eingelegt, so nimmt sie den Synchronring mit und drückt ihn dabei gegen einen Gegenkonus des Kupplungskörpers. Eine reibschlüssige Verbindung zwischen Synchronring und Kupplungskörper wird dabei hergestellt, wodurch eine Drehzahlangleichung zwischen der Welle, der Schiebemuffe und dem Synchronring sowie dem Kupplungskörper und dem zugehörigen Zahnrad des einzuschaltenden Räderpaares erreicht wird. Am Synchronring vorgesehene Sperrflächen werden dabei in eine Stellung gebracht, in der sie mit zugehörigen und angepaßten Sperrflächen an der Schiebemuffe in Eingriff gelangen und dadurch ein axiales Verschieben der Schiebemuffe in Richtung auf den Kupplungskörper verhindern. Die Sperrflächen sind üblicherweise an einer Außenverzahnung des Synchronringes angebracht, die der Außenverzahnung des Kupplungskörpers angepaßt ist; die Gegenflächen sind dabei an den Enden der Zähne angebracht, welche die Innenverzahnung der Schiebemuffe bilden. Erst bei Erreichen der Synchrondrehzahl läßt sich die Schiebemuffe an den Sperrflächen des Synchronringes vorbei in die Außenverzahnung des Kupplungskörpers einschieben.

Beim Hochschalten des Getriebes, d. h. beim Einlegen eines höheren Ganges, läuft das zur Schiebemuffe gleichachsige Zahnrad, zu dem beim Hochschalten die Verbindung hergestellt wird, zunächst schneller als die Schiebemuffe, so daß es üblicherweise zum Erreichen eines Gleichlaufes über den Synchronring abgebremst werden muß. Treten jedoch starke Bremskräfte auf das Getriebe auf, beispielsweise infolge der bei kaltem Getriebe höheren Viskosität des Getriebeöles, so wird der Radsatz nach dem Ausrücken des niedrigeren Ganges durch die Bremskräfte verzögert, wodurch die Getriebedrehzahl während des Einrückens des höheren Ganges soweit abfallen kann, daß Gleichlauf zwischen der Schiebemuffe und dem Kupplungskörper entsteht und die Schiebemuffe an den Sperrflächen des Synchronringes vorbei gleitet, ohne daß zwischen dem Synchronring und dem Kupplungskörper eine reibschlüssige Verbindung hergestellt wird. Durch diesen Bremseffekt und weiterer Verminderung der Drehzahl des zur Schiebemuffe gleichachsigen Zahnrades kann es zu einem sogenannten Kaltkratzen kommen, welches als unangenehm empfunden wird.

Zur Verhinderung dieses unangenehmen Geräusches wird in der DE-PS 34 44 670 eine Synchronisiereinrichtung für die Schaltkupplungen von Schaltgetrieben für Kraftfahrzeuge beschrieben mit mindestens einem Räderpaar, dessen mit einer Schiebemuffe gleichachsiges Zahnrad einen Kupplungskörper mit Außenverzahnung aufweist und durch axiales Verschieben der mit einer Welle über einen Synchronkörper drehfest verbundenen, eine Innenverzahnung aufweisenden Schiebemuffe in den Kraftfluß ein- und ausschaltbar ist, sowie mit einem Synchronring, der in Umfangsrichtung mit der Schiebemuffe in formschlüssiger und mit dem Kupplungskörper in reibschlüssiger Verbindung steht und der Sperrflächen für die Schiebemuffe aufweist, die bei jeder Relativdrehung zwischen Kupplungskörper und Schiebemuffe in dem durch die formschlüssige Verbindung zwischen Synchronring und Schiebemuffe definierten Endlagen einen Eingriff der Innenverzahnung der Schiebemuffe in die Außenverzahnung des Kupplungskörpers verhindern und erst bei Erreichen der Synchrondrehzahl unter Verdrehen von Synchronring und Kupplungskörper zulassen. Die in Laufrichtung vorderen Sperrflächen an der Schiebemuffe weisen dabei eine größere axiale Ausdehnung auf als die in Laufrichtung hinteren Sperrflächen. Die Außenverzahnung des Kupplungskörpers sowie die Sperrflächen der Schiebemuffe sind zwar asymmetrisch ausgestaltet, jedoch dergestalt, daß sie zwar die gleiche Neigung gegenüber der Achsrichtung aufweisen, jedoch in bezug auf die Längsmitte eines jeden Zahnes derart versetzt sind, daß die beiden zu einem Zahn gehörenden Laufflächen unterschiedliche axiale Ausdehnungen und damit unterschiedlich große Flächen aufweisen, wobei die in Laufrichtung vorderen Sperrflächen an der Schiebemuffe die größere axiale Ausdehnung besitzen, verglichen mit der in Laufrichtung hinteren Sperrfläche.

Durch Einsatz einer definierten Asymmetrie im First der Sperrverzahnung der Schiebemuffe wird der Effekt gezielt verstärkt, daß bei einer Hochschaltung nach Ende des Synchronvorganges der Synchronring in die Rückschaltsperrstellung einläuft, bevor die Schiebemuffe mit ihrer Rückschaltsperrkante in axialer Richtung an der Rückschaltsperrkante des Synchronringes vorbeigelaufen ist. Die Rückschaltsperrstellung ist die Stellung am entgegengesetzten Verdrehanschlag, während die Rückschaltsperrfläche die lange der beiden Sperrflächen an der Schiebemuffe ist. Nach Entsperren aus dieser Rückschaltsperrstellung kann dann ohne Einspurkratzen der Schaltvorgang beendet werden. Durch die oben beschriebene Asymmetrie erfolgt aber in der Entsperrphase nach einer Hochschaltung beim Einlaufen des Synchronringes in die Rückschaltsperrstellung ein Kraftimpuls auf die Schiebemuffe, der am Schalthebel deutlich als Schlag zu spüren ist.

Der Erfindung liegt die Aufgabe zugrunde, den Kraftimpuls auf die Schiebemuffe zu vermeiden und so den auf den Schalthebel einwirkenden Schlag zu verhindern.

Die Aufgabe wird gelöst durch ein Schaltgetriebe mit den Merkmalen des Anspruchs 1. In der Erfindung wird eine Asymmetrie im First der Sperrverzahnung der Schiebemuffe definiert, die entgegengesetzt zu der aus dem Stand der Technik angeordneten Verzahnung ausgebildet ist. Damit wird erreicht, daß der Effekt des Einlaufens in die Rückschaltsperrstellung verhindert wird und ein deutlicher Kraftstoß am Schalthebel unterbleibt. Die Rückschaltsperrfläche stellt die in axialer Richtung kurze Sperrfläche an der Schiebemuffe dar. Dieser Sachverhalt trifft sowohl für die Montage der Synchronisiereinrichtung auf der Hauptwelle bzw. Getriebeabtriebswelle zu, dann ist es die in Laufrichtung vordere Sperrfläche, wobei die Schiebemuffe, der Synchronring und der Synchronkörper drehzahlkonstant sind und die Drehzahl des losen Zahnrades synchronisiert wird, als auch für die Montage der Synchronisiereinrichtung auf der Vorgelegewelle, bei der die Drehzahl des losen Zahnrades konstant ist und die Drehzahl von Schiebemuffe, Synchronring und Synchronkörper synchronisiert wird, dann ist es die in Laufrichtung hintere Sperrfläche.

Die Erfindung wird anhand einer Zeichnung näher erläutert.

Es zeigen:
- Fig. 1: eine Synchronisiereinrichtung in einem Getriebe;
- Fig. 2: die Verzahnungen im Sperrzustand und
- Fig. 3: die Verzahnungen im Entsperrzustand.

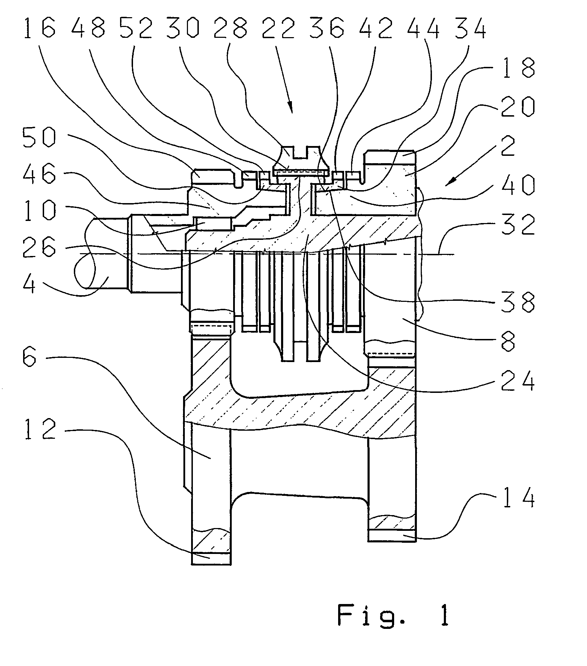

Die Fig. 1 zeigt einen Teil eines Getriebes 2 mit einer Eingangswelle 4 und einer Vorgelegewelle 6. In der Eingangswelle 4 ist eine Hauptwelle 8 in einem Lager 10 drehbar gelagert. Die Vorgelegewelle 6 weist zwei feste Verzahnungen 12 und 14 auf. Auf der Eingangswelle 4 ist eine Verzahnung 16 fest angeordnet. Eine weitere Verzahnung 18 ist auf einem losen Zahnrad 20 vorgesehen, daß auf der Hauptwelle 8 drehbar gelagert ist. Die Verzahnung 12 kämmt mit der Verzahnung 16, während die Verzahnung 14 mit der Verzahnung 18 kämmt. Eine Synchronisiereinrichtung 22 weist einen Synchronkörper 24 auf, der fest auf der Hauptwelle 8 gebildet ist. Er besitzt an seinem äußeren Umfang eine Außenverzahnung 30, auf der eine Schiebemuffe 28 mit ihrer Innenverzahnung 26 axial entlang der Drehachse 32 der Hauptwelle 8 bewegt werden kann. Ein Synchronring 34 ist mit seiner kegelstumpfförmigen, äußeren Reibfläche 36 auf einer entsprechend geformten ebenfalls kegelstumpfförmigen, inneren Reibfläche 38 des Kupplungskörpers 40 vorgesehen. Die Sperrverzahnung 42 am Synchronring 34 und die Kupplungsverzahnung 44 am Kupplungskörper 40 sind so ausgebildet, daß die Schiebemuffe 28 mit ihrer Innenverzahnung 26 in diese Verzahnungen 42 und 44 eingreifen kann, wenn die Schiebemuffe 28 axial verschoben wird. Die Eingangswelle 4 weist ebenfalls einen Kupplungskörper 46 mit Kupplungsverzahnung 48 und einen Synchronring 50 mit Sperrverzahnung 52 auf.

Die Fig. 2 zeigt die Innenverzahnung 26 der Schiebemuffe 28, die eine asymmetrisch ausgebildete Spitze aufweist. Die Seite 54 der Verzahnung 26 bildet eine größere axiale Ausdehnung 60 auf als die axiale Ausdehnung 58 auf der Seite 56. Im hier gezeigten Sperrzustand liegt die Seite 54 solange an der Seite 62 der Sperrverzahnung 52 an, bis Synchrondrehzahl zwischen Schiebemuffe 28 und Kupplungskörper 46 erreicht ist. Der Pfeil 64 deutet die Drehrichtung der Schiebemuffe 28 an, der Pfeil 66 die Drehrichtung des Kupplungskörpers 46 und der Pfeil 68 die Wirkrichtung eines Verlustmomentes durch die Abbremsung des Kupplungskörpers 46. Die Drehzahl des Kupplungskörpers 46 wird beim Synchronisiervorgang auf die Drehzahl der Schiebemuffe 28 angeglichen, während der Synchronkörper 24, der Synchronring 50 und die Schiebemuffe 28 in ihrer Drehzahl konstant bleiben.

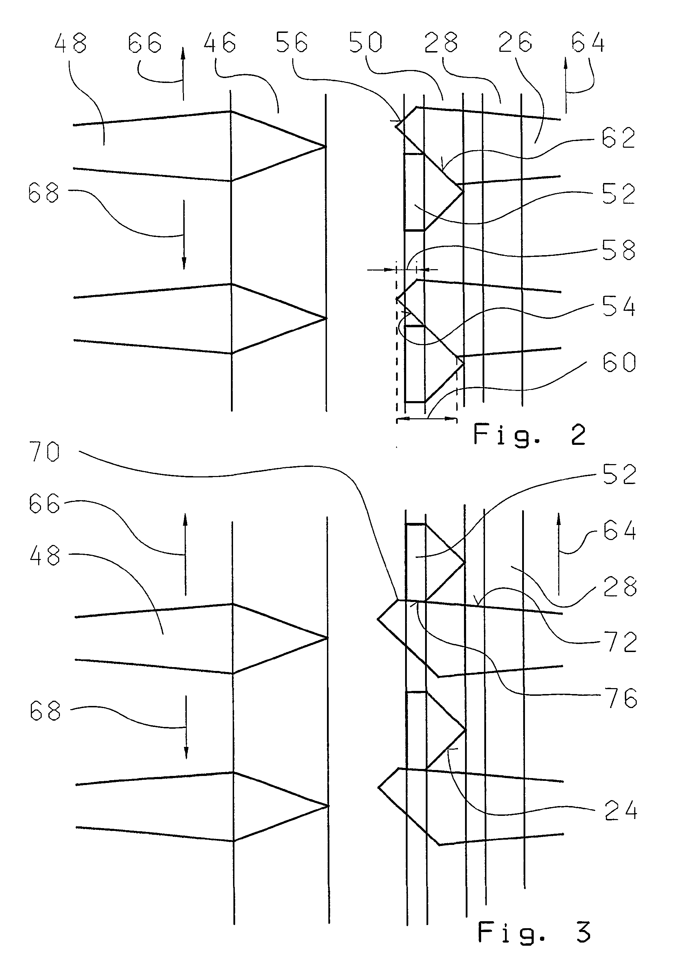

In der Fig. 3 ist der Entsperrzustand dargestellt. In der Entsperrphase hat der Synchronring 50 durch die kraftschlüssige Verbindung über die kegelstumpfförmigen Reibflächen die gleiche Drehzahl wie der Kupplungskörper 46 eingenommen. Der Synchronring 50 wird dadurch mit dem Kupplungskörper 46 in Richtung des wirkenden Verlustmomentes 68 verdreht. Aufgrund der kürzeren axialen Ausdehnung der Seite 56 befindet sich die Außenkante 70 der Rückschaltsperrseite 72 an der Schiebemuffe 28 in einer in Richtung auf die Spitze der Verzahnung 26 vorgezogenen Position. Dadurch kann die Außenkante 70 bei der Verdrehung des Synchronringes 50 aus der Hochschaltsperrstellung (Fig. 2) in Richtung der Rückschaltsperrstellung (Fig. 3) nicht mehr auf die Sperrseite 74 der Sperrverzahnung 52 auflaufen. Die Schiebemuffe 28 gleitet mit der Rückschaltsperrseite 72 an der Seitenkante 76 der Sperrverzahnung 52 vorbei. Ein Impuls durch das Auftreffen der Seite 56 auf die Sperrseite 74 und eine Rückweisung der Schiebemuffe 28 in axialer Richtung wird vermieden.

### Bezugszeichen

- 2: Getriebe
- 4: Eingangswelle
- 6: Vorgelegewelle
- 8: Hauptwelle
- 10: Lager
- 12: Verzahnung
- 14: Verzahnung
- 16: Verzahnung
- 18: Verzahnung
- 20: Zahnrad
- 22: Synchronisiereinrichtung
- 24: Synchronkörper
- 26: Innenverzahnung
- 28: Schiebemuffe
- 30: Außenverzahnung
- 32: Drehachse
- 34: Synchronring
- 36: Reibfläche
- 38: Reibfläche
- 40: Kupplungskörper
- 42: Sperrverzahnung
- 44: Kupplungsverzahnung
- 46: Kupplungskörper
- 48: Kupplungsverzahnung
- 50: Synchronring
- 52: Sperrverzahnung
- 54: Seite
- 56: Seite
- 58: Ausdehnung
- 60: Ausdehnung
- 62: Seite
- 64: Pfeil
- 66: Pfeil
- 68: Pfeil
- 70: Außenkante
- 72: Rückschaltsperrseite
- 74: Sperrseite
- 76: Seitenkante

## Patentansprüche

1. Schaltgetriebe (2) für Kraftfahrzeuge mit einer Synchronisiereinrichtung (22) für Schaltkupplungen mit mindestens einem Räderpaar, dessen mit einer Schiebemuffe (28) gleichachsiges Zahnrad einen Kupplungskörper (46) mit Außenverzahnung (48) aufweist und durch axiales Verschieben der mit einer Welle (8) über einen Synchronkörper (24) drehstarr verbundenen, eine asymmetrische Innenverzahnung (26) aufweisenden Schiebemuffe (28) in den Kraftfluß ein- bzw. aus ihm ausschaltbar ist, sowie mit einem Synchronring (50), der in Umfangsrichtung mit der Schiebemuffe (28) in formschlüssiger und mit dem Kupplungskörper (46) in reibschlüssiger Verbindung steht und Sperrflächen (62, 74) aufweist, die mit Sperrflächen (54, 56) an der Schiebemuffe (28) zusammenwirken in Form einer Rückschaltsperrfläche (56) beim Rückschalten des Schaltgetriebes und in Form einer Hochschaltsperrfläche (54) beim Hochschalten des Schaltgetriebes, wobei die Sperrflächen (54, 62 bzw. 56, 74) bei jeder Relativdrehung zwischen Kupplungskörper (46) und Schiebemuffe (28) in den durch die formschlüssige Verbindung zwischen Synchronring (50) und Schiebemuffe (28) definierten Endlagen ein Ineingriffkommen der Innenverzahnung (26) der Schiebemuffe (28) mit der Außenverzahnung (48) des Kupplungskörpers (46) verhindern und erst bei Erreichen der Synchrondrehzahl unter Verdrehen des Synchronrings (50) und Kupplungskörper (46) zulassen, **dadurch gekennzeichnet , dass** bei gleicher Neigung der Rückschaltsperrfläche (56) und der Hochschaltsperrfläche (54) gegenüber der Achsrichtung der Innenverzahnung der Schiebemuffe die Rückschaltsperrfläche (56) an der Innenverzahnung (26) der Schiebemuffe (28) eine kleinere axiale Ausdehnung aufweist als die axiale Ausdehnung (60) der Hochschaltsperrfläche (54).

## Claims

1. Manual gear (2) for motor vehicles with a synchroniser device (22) for clutches with at least one gear pair, the gear of which coaxial with a sliding sleeve (28) has a clutch body (46) with external teeth (48) and by axially displacing the sliding sleeve (28) with a set of asymmetrical teeth (26) via a synchroniser body (24) non-rotatably connected to a shaft (8), can be connected into and out of the power train, and having a synchroniser ring (50) which is positively connected to the sliding sleeve (28) in the circumferential direction and to the clutch body (46) in a frictional connection and has locking surfaces (62, 74) which co-operate with locking surfaces (54, 56) on the sliding sleeve (28) in the form of a downward shift locking surface (56) as the manual gear is shifted down and in the form of an upward shift locking surface (54) as the manual gear is shifted to a higher gear, which locking surfaces (54, 62 respectively 56, 74) prevent the internal teeth (26) of the sliding sleeve (28) from engaging with the external teeth (48) of the clutch body (46) with every relative rotation between the clutch body (46) and sliding sleeve (28) in the end positions defined by the positive connection between the synchroniser ring (50) and sliding sleeve (28) and do not permit such engagement until the synchronised rotation speed has been reached when the synchroniser ring (50) and clutch body (46) are rotating, **characterised in that**, whilst the downward shift locking surface (56) and the upward shift locking surface (54) are disposed at the same inclination with respect to the axial direction of the internal teeth of the sliding sleeve, the downward shift locking surface (56) on the internal teeth (26) of the sliding sleeve (28) has a smaller axial extension than the axial extension (60) of the upward shift locking surface (54).

## Revendications

1. Boîte de vitesses à changement de vitesse (2) pour véhicules automobiles, comprenant un dispositif de synchronisation (22) pour embrayage qui comprend au moins deux roues, dont une roue dentée ayant le même axe qu'un baladeur (28) comporte un corps d'embrayage (46) à denture extérieure (48) et peut être intercalée dans le flux de force et en être exclue par le déplacement axial du baladeur (28) relié solidairement en rotation à un arbre (8) par l'intermédiaire d'un corps de synchroniseur (24) et qui présente une denture intérieure asymétrique (26), ainsi qu'une bague de synchroniseur (50) qui est en liaison, dans la direction circonférentielle, avec le baladeur (28) par complémentarité de forme et avec le corps d'embrayage (46) par friction, et qui comporte des surfaces de verrouillage (62, 74) qui coopèrent avec des surfaces de verrouillage (54, 56) prévues sur le baladeur (28), avec celle formée d'une surface de verrouillage de rétrogradage (56) lors du rétrogradage de la boîte de vitesses, et avec celle formée d'une surface de verrouillage de changement en montée (54) lors du changement en montée de la boîte de vitesses, tandis que, s'il y a une rotation relative entre le corps d'embrayage (46) et le baladeur (28) dans les positions extrêmes définies par la liaison par complémentarité de forme entre la bague de synchroniseur (50) et le baladeur (28), les surfaces de verrouillage (54, 62 respectivement 56, 74) interdisent une mise en prise de la denture intérieure (26) du baladeur (28) avec la denture extérieure (48) du corps d'embrayage (46), et n'autorisent cette mise en prise que lorsque la vitesse de rotation synchrone a été atteinte avec rotation entre la bague de synchroniseur (50) et le corps d'embrayage (46), **caractérisée en ce que** la surface de verrouillage de rétrogradage (56) formée sur la denture intérieure (26) du baladeur (28) présente une extension axiale plus petite que l'extension axiale (60) de la surface de verrouillage de changement en montée (54), en conservant la même inclinaison par rapport à la direction axiale de la denture intérieure du baladeur pour la surface de verrouillage de rétrogradage (56) et pour la surface de verrouillage de changement en montée (54).
